# EUROPÄISCHE PATENTSCHRIFT

(11) **EP 4 462 315 B1**
(45) Veröffentlichungstag und Bekanntmachung des Hinweises auf die Patenterteilung: **16.09.2026**
(21) Anmeldenummer: 23173184.5
(22) Anmeldetag: 12.05.2023
(51) Int. Cl.: G06N 3/098

(54) **VORRICHTUNGEN UND VERFAHREN FÜR FÖDERALES RECHNEN**
APPARATUSES AND METHODS FOR FEDERATED COMPUTING
DISPOSITIFS ET PROCÉDÉS DE CALCUL FÉDÉRAL

(43) Veröffentlichungstag der Anmeldung: 13.11.2024
(73) Patentinhaber: Katulu GmbH, 20099 Hamburg (DE)
(72) Erfinder: Hohmeier, Orlando, 20253 Hamburg (DE); Kuehne-Schlinkert, Michael, 22177 Hamburg (DE)
(74) Vertreter: Burger, Hannes Alfred

(56) Entgegenhaltungen:
- HIESSL THOMAS ET AL: "Cohort-based federated learning services for industrial collaboration on the edge", JOURNAL OF PARALLEL AND DISTRIBUTED COMPUTING, ELSEVIER, AMSTERDAM, NL, vol. 167, 2 May 2022 (2022-05-02), pages 64 - 76, XP087090969, ISSN: 0743-7315, [retrieved on 20220502], DOI: 10.1016/J.JPDC.2022.04.021

## Beschreibung

Bei den gängigen Systemen und Verfahren zum maschinellen Lernen und zum Analysieren werden durch direkten Zugriff auf Eingabedaten Methoden zum Aufbereiten der Daten, sowie des maschinellen Lernens oder des Analysierens, zusammen nachfolgend als Rechnen bezeichnet, durchgeführt. Ein Computersystem hat Eingabedaten und Berechnungsanweisungen und berechnet aus den Eingabedaten die Ausgabedaten. Die Ausgabedaten können trainierte Modelle oder Analyseergebnisse sein.

Verteiltes Rechnen (engl. Distributed Computing) ist bereits seit einigen Jahrzehnten ein bekanntes Vorgehen. Durch die Verteilung der Rechenlast auf mehrere Recheneinheiten (Knoten), und dadurch den Einsatz von echten nebenläufigen Prozessen, konnten Vorteile gegenüber dem zentralisierten Rechnen auf einer Recheneinheit erzielt werden. Darunter ist Leistungssteigerung, indem eine Aufgabe in Teile zerlegt wird, die wiederum je auf einem der Knoten gleichzeitig berechnet wird. Ein weiterer Vorteil ist Skalierbarkeit, da weitere Knoten hinzugefügt werden können. Weitere Vorteile sind Ausfallsicherheit und Redundanz.

Beim verteilten Rechnen werden Eingabedaten und Berechnungsanweisungen, d.h. eine Pipeline, gegebenenfalls an entfernt verortete, Clients gesendet und die Ausgabedaten werden zurückgesendet. Dabei entstehen hohe Datenmengen bei der Übertragung. Weitere Nachteile beim verteilten Rechnen sind beispielsweise die erforderliche zusätzliche Verwaltung der Knoten, gegebenenfalls auf einem zentralen Server, sowie größere Risiken, da zwischen den Knoten und gegebenenfalls dem Server Daten übermittelt werden müssen. Darüber hinaus ist beim herkömmlichen verteilten Rechnen, wo es nur auf den Einsatz der Rechenleistung der entfernten Systeme ankommt, auch möglicherweise das Versenden großer Datenmengen erforderlich, um die Eingabedaten und die Berechnungsvorschriften und ebenso die Rechenergebnisse, also die Ausgabedaten zu übertragen. Große Datenmengen erfordern große Bandbreite.

Verteiltes Rechnen kann auch bei Maschinenlernen eingesetzt werden, wobei hier in der Regel ein untrainiertes Modell, Trainingsdaten und eine Pipeline, die die Anweisungen zum Trainieren enthält, von einem Server zu mehreren Clients und ein trainiertes Modell zurück an den Server übermittelt wird. Eine Pipeline wird üblicher Weise als eine Reihe von aufeinanderfolgenden Schritten oder Operationen verstanden, die zur Verarbeitung und Analyse von Daten verwendet werden. Beim Beispiel des Maschinenlernens, enthält eine Pipeline üblicher Weise die Architektur des zu trainierenden Modells und die Trainingsinstruktionen für das System, das ein Modell trainieren soll.

Als Weiterentwicklung des verteilten Rechnens kann das föderale Lernen (engl. Federated Learning) angesehen werden, bei dem nicht mehr das bloße Nutzen der Rechenleistung von verteilten Systemen im Vordergrund steht, sondern vielmehr ein verteiltes Trainieren von Maschinenlernmodellen.

Eine andere Weiterentwicklung des verteilten Rechnens besteht in der föderalen Datenauswertung. Ähnlich wie beim föderalen Lernen liegen die zu analysierenden Daten hierbei bereits in den Knoten vor und sind möglicherweise sowohl der Menge nach als auch von der Art der Daten sehr unterschiedlich zu den jeweils anderen Knoten. Vom Server werden die Verfahrensschritte zur Analyse übermittelt. Bei einer Analyse wird üblicher Weise nicht von einer Pipeline gesprochen, allerdings kann die Folge von Funktionen, d.h. die Verfahrensschritte, die zur Analyse eingesetzt wird, auch als Pipeline aufgefasst werden. Diese Art des verteilten Rechnens wird im Weiteren föderales Analysieren genannt. Föderales Lernen und föderales Analysieren können zusammengefasst als föderales Rechnen bezeichnet werden. Im Rahmen dieser Beschreibung soll als Pipeline eine Folge von Operationen, auch Vorgängen genannt, verstanden werden die zum föderalen Rechnen, d.h. Maschinenlernen oder Analysieren, eingesetzt wird.

Im Unterschied zum verteilten Rechnen wird hierbei in der Regel auf Eingabe- bzw. Trainingsdaten zurückgegriffen, die sich bereits beim Client befinden. Dies kann als eine der Motivationen den Grund haben, dass ein Unternehmen die Daten, die als Trainingsdaten verwendet werden sollen, nicht herausgeben möchte oder darf.

Beim föderalen Lernen wird ein Maschinenlern-Modell auf mehreren Knoten mit jeweils lokalen Datensätzen trainiert, ohne die Daten auszutauschen. Vom Server wird zu den Clients lediglich die Pipeline übermittelt. Die Pipeline kann die Architektur des zu trainierenden Modells beinhalten, d.h. das untrainierte Modell. Das Trainieren kann dadurch bewirkt werden, dass auf jedem der Knoten ein Modell trainiert wird. Optional können sich die Knoten im Austausch befinden und aktualisierte Modellparameter in regelmäßigen Abständen gegenseitig mitteilen. Die einzelnen trainierten Modelle können dann, beispielsweise durch einen Server, zusammengefasst werden, was auch Aggregation genannt wird, wodurch die Teil-Modelle zu einem Gesamt-Modell zusammengefasst werden.

Föderales Rechnen kann dazu beitragen, die Datenbarrieren beim Datenaustausch zu bewältigen, indem es Unternehmen ermöglicht, maschinelle Lernmodelle auf dezentralen Datenquellen zu trainieren, ohne vertrauliche Informationen weiterzugeben oder Datenschutzbestimmungen zu verletzen - oder mit den gleichen Vorteilen Analysen auf den dezentralen Datenquellen durchzuführen.

Beim Einsatz von sogenannten Fitness-Apps, um Rad- und Laufstrecken aufzuzeichnen, werden gemeinsam genutzte aggregierte Formen von Daten verwendet, wie beispielsweise globale Karten mit besonders oft gelaufenen Strecken. Diese Daten können jedoch sensible Informationen enthalten, die auch zum Ursprung der Daten, d.h. den Nutzern zurückverfolgt werden können. Bei Versuchen wurden beispielsweise Militärbasen identifiziert und es konnten sogar Wege einzelner Personen von deren Einsatzorten bis zu deren Wohnorten nachverfolgt werden.

Darüber hinaus können Daten, die von den Benutzern oft unbemerkt und in der Regel anonymisiert gesammelt werden, wie beispielsweise von Wetter-Apps, auch dazu verwendet werden, persönliche Informationen über Benutzer herauszufinden. In einem Versuch konnten durch solche Daten Informationen über Menschen ermittelt werden, die in Kernkraftwerken arbeiteten oder bestimmte Kirchen besuchten.

Weder die einfach aggregierten Formen noch das Anonymisieren von Daten ist eine ausreichende Maßnahme zum Schutze der Daten, da Untersuchungen gezeigt haben, dass die meisten Datenpunkte mit den richtigen Techniken de-anonymisiert werden können.

Der Wunsch nach Privatsphäre und Datenschutz steigt, die aktuellen Methoden der Industrie zum Schutz von Daten sind jedoch oft unzureichend. Daher sinkt die Bereitschaft von Datenbesitzern, ihre Daten zu teilen.

Darüber hinaus gibt es auch Arten von Daten, die grundsätzlich nicht weitergegeben werden, beispielsweise wegen ihres Wertes als Geschäftsgeheimnisse oder geistiges Eigentum oder aufgrund von Datenschutzbestimmungen wie beispielsweise GDPR, HIPAA sowie branchenspezifische Vorschriften.

Ein weiteres Hindernis sind die Kosten bzw. damit verbunden Energieaufwände, die mit dem Streamen und Speichern riesiger Datenmengen über unterschiedliche Clouds und On-Premise-Installationen hinweg verbunden sind. Diese Kosten und der Mangel an Datensicherheit verhindern diesen Einsatz der Daten trotz der bekannten Vorteile der Verwendung von maschinellem Lernen auf einem umfassenden Datensatz, beispielsweise, um bessere Geschäftsentscheidungen treffen zu können.

Diese unterschiedlichen Datenbarrieren führen zu fragmentierten und/oder nicht verfügbaren Daten.

Daher bestehen für größere Unternehmen mit unterschiedlichen Geschäftsbereichen erhebliche Herausforderungen, da die gemeinsame Nutzung von Daten im gesamten Unternehmen verhindert wird.

Organisatorische Barrieren, einschließlich inkompatibler Datensysteme und politischer Spannungen, können den Datenaustausch innerhalb großer Organisationen ebenfalls einschränken.

Dieser fehlende Zugriff auf Daten schränkt die Fähigkeit ein, maschinelle Lernmodelle zu trainieren, um intelligente Geschäftsentscheidungen zu treffen.

Ohne Eingabedaten können aber weder Verfahren zum maschinellen Lernen noch zum Analysieren eingesetzt werden, welche beispielsweise die Voraussetzung für die Optimierung unterschiedlicher Industrieprozess, die Entwicklung autonomer Systeme, oder automatischer Assistenzsysteme sind.

Neben den genannten Faktoren, wie z. B. der mangelnden Bereitschaft, Daten zu teilen, Exportkontrolle, Datenübertragungskosten und Datenschutzbestimmungen, ergeben sich daraus, dass Daten aus verschiedenen Datenquellen stammen weitere Datenbarrieren, die einen gewissen Aufwand erfordern, um beispielsweise verschiedene Datenquellen in einem kohärenten System zu vereinheitlichen, d.h. die Eingabedaten zu homogenisieren.

Denn, während beim rein verteilten Lernen die Trainingsdaten weitestgehend homogen ausgestaltet und mengenmäßig einigermaßen gleichverteilt sind, können beim föderalen Lernen die Trainingsdaten durchaus heterogen und in jedem der Knoten ein unterschiedlich großer Trainingsdatensatz vorliegen. Gleiches gilt für das föderale Analysieren.

Um die Daten zu homogenisieren, ist ein Vorbereiten der Daten (engl. Pre-Processing) notwendig. Dies kann darin bestehen, dass die Daten gegebenenfalls maschinenlesbar gemacht werden müssen. Dies sowie das Übertragen der erforderlichen Teile für das Training bzw. die Analyse ist schwierig und fehleranfällig.

Unterschiedliche Datenquellen liegen in verschiedenen Formen und Formaten vor, was es schwierig macht, sie für Zwecke des maschinellen Lernens oder Analysierens abzugleichen und zu verarbeiten.

Darüber hinaus hat die Vorverarbeitung der Daten für maschinelles Lernen, beispielsweise für Merkmalsextraktion (Feature Engineering), einen erheblichen Einfluss auf die Qualität des verwendeten Maschinenlern-Modells. Dieser Prozess ist jedoch fehleranfällig da er stark von den Eingabedaten abhängig ist. Auch wird dadurch Feature-Engineering verhindert, was ein großes Problem für Bereitstellungen in variablen und dynamischen Umgebungen wie Fabriken, Krankenhäusern und großen Organisationen mit gemeinsamem Datenbesitz darstellt.

Die aktuellen Methoden nach dem Stand der Technik bieten keinen Mechanismus zur Verarbeitung verschiedener Datenquellen und zur Überwindung aller Datenbarrieren.

Durch die geschilderten Unterschiede der Datenquellen bei beiden Arten des föderalen Rechnens entstehen signifikante Nachteile, da insbesondere die Trainingsdaten vorab nicht richtig Vorverarbeitet werden können, da sie nur dem Knoten zur Verfügung stehen. Beim föderalen Lernen wird dadurch eine Merkmalsextraktion erschwert bzw. verhindert. Ebenfalls beim föderalen Analysieren können die zu analysierenden Daten nicht vorbereitet werden, um die Analyse mit größtmöglicher Effektivität und Effizienz durchführen zu können. Zusammenfassend folgt daraus, dass die Datenaufbereitung, Merkmalsextraktion sowie das Homogenisieren unterschiedlicher Datensätze im aktuellen Stand der Technik für föderales Rechnen nicht gelöst sind. Dadurch ist föderales Rechnen in heterogenen Umgebungen wie beispielsweise Industrieanlagen oder autonomen Fahrzeugen untauglich. Ferner ist es mit dem Stand der Technik nicht möglich, einen Datensatz mehrfach für verschiedene Aufgaben des maschinellen Lernens und/oder des Analysierens einzusetzen, denn im Stand der Technik fehlt es an den notwendigen Mechanismen für das Aufbereiten sowie zur Extraktion unterschiedlicher Merkmale unter Wahrung der für die Umgehung der Datenbarrieren relevanten Prinzipien, insbesondere der Privatheit der Daten.

Aus der Veröffentlichung HIESSL THOMAS ET AL: "Cohort-based federated learning services for industrial collaboration on the edge", Journal of Parallel and Distributed Computing, 2. Mai 2022 (2022-05-02) ist ein System zur Bereitstellung von Federated Learning (FL) als Dienst (FLaaS) für industrielle Kunden bekannt, das auf Edge-Geräten eingesetzt wird. Das System umfasst eine Prozessbeschreibung und eine Softwarearchitektur, die die Anforderungen industrieller Kunden berücksichtigen. Es organisiert Kunden in Kohorten mit ähnlichen Datenverteilungen, um verzerrte Daten zu bewältigen. Das System wird auf zwei industriellen Datensätzen evaluiert.

Die Aufgabe der Erfindung besteht darin die Nachteile des Standes der Technik zu überwinden, den Stand der Technik weiterzubilden und ein besseres föderales Rechnen zu ermöglichen.

Diese Aufgabe löst die vorliegende Erfindung in einer ersten Ausführungsform durch eine Vorrichtung als Client für ein föderales Rechensystem nach Anspruch 1.

In einer zweiten Ausführungsform wird eine Vorrichtung als Server für ein föderales Rechensystem nach Anspruch 3 bereitgestellt.

Dadurch, dass die Prozesspipeline nur auf Clients ausgeführt wird, die Eingabedatensätze gespeichert haben, deren Schema mit dem Prozessdatenschema, auf dem die Prozesspipeline basiert übereinstimmt, kann ein Fehlschlagen der Abarbeitung der Prozesspipeline verhindert werden. Weiterhin erlaubt es die Registrierung der Eingabedatenschemata, die vorhandenen Eingabedatensätze für mehrere Anwendungen einzusetzen. Durch den Einsatz des Prozessdatenschemas kann eine besser geeignete Prozesspipeline erzeugt werden und zum Einsatz kommen, wodurch das föderale Rechnen insgesamt verbessert wird. Dies gilt sowohl für jeden der Clients als auch den Server.

In einer vorteilhaften Weiterbildung der Clients umfasst die Client-Vorrichtung eine Speichereinheit und eine Recheneinheit. Dabei ist die Speichereinheit dazu eingerichtet die Eingabedatensätze zu speichern. Die Recheneinheit ist dazu eingerichtet, die Eingabedatensätze von der Speichereinheit zu erhalten, die Eingabedatenschemata aus den Eingabedatensätzen zu extrahieren, die Eingabedatenschemata in dem Server zu registrieren, die Prozesspipeline vom Server zu empfangen, aus den Eingabedatensätzen anhand der Prozesspipeline die Ausgabedatensätze zu erzeugen, und die Ausgabedatensätze an den Server zu übertragen. Dabei sind die Speichereinheit und die Recheneinheit in einer Datenverarbeitungsvorrichtung oder in mehreren, verschiedenen, jedoch durch einen privilegierten Übertragungsweg miteinander verbundenen, Datenverarbeitungsvorrichtungen ausgestaltet.

Dadurch kann vorteilhafter Weise in den Knoten die Datenspeicherung von der lokalen Recheneinheit voneinander getrennt vorliegen. Dadurch können beispielsweise durch den Client mehrere Datenquellen bearbeitet werden oder auch verschiedene Recheneinheiten für verschiedene Datenquellen eingesetzt werden.

In einer vorteilhaften Weiterbildung des Servers ist die Vorrichtung weiterhin dazu eingerichtet, um im Ansprechen auf eine Anfrage des Benutzers, die registrierten Eingabedatenschemata als Prozessdatenschemata auszugeben.

Das Prozessdatenschemata, das für die Prozesspipeline verwendet wird, kann damit auf die registrierten Eingabedatenschemata angepasst werden, d.h. dass die entstehende Prozesspipeline für die entsprechenden Eingabedatensätze operabel ist.

Die Vorrichtung als Server ist dazu eingerichtet, um die Ausführbarkeit der Prozesspipeline für die registrierten Eingabedatenschemata zu prüfen.

Die erhaltene Prozesspipeline kann so vom Server bereits vor der Verteilung an die Clients auf Ausführbarkeit überprüft werden, wodurch Fehler bei der Verarbeitung durch die Clients vermieden werden können. Eine Überprüfung kann auch vor der Übermittlung an den Server, oder zu jedem beliebigen anderen Zeitpunkt alternativ und/oder zusätzlich durchgeführt werden. In einer vorteilhaften Weiterbildung der Clients und/oder des Servers ist die Prozesspipeline derart ausgestaltet ist, dass durch das Erzeugen eines Ausgabedatensatzes aus einem Eingabedatensatz entweder ein Maschinenlernen derart durchgeführt wird, dass der Eingabedatensatz als Trainingsdaten verwendet wird und der Ausgabedatensatz ein trainiertes Modell oder einen Teil davon darstellt, oder ein Analysieren derart durchgeführt wird, dass der Eingabedatensatz analysiert wird und der Ausgabedatensatz Analyseergebnisse oder einen Teil davon darstellt.

Durch den Einsatz einer entsprechenden Prozesspipeline wird damit föderales Lernen oder föderales Analysieren verbessert. Insbesondere wird hierdurch erst ermöglicht, die vorhandenen Eingabedatensätze mehrfach, gegebenenfalls auch für Anwendungen verschiedener Art, d.h. föderales Lernen und föderales Analysieren, zu verwenden, ohne erneut das Pre-Processing durchführen zu müssen. Beispielsweise kann ein Eingabedatensatz in einem Fahrzeug somit verwendet werden, um zuerst ein Modell zum Erkennen von Verkehrszeichen zu trainieren, und dann eine Analyse des aufgezeichneten Verkehres durchgeführt werden.

In einer vorteilhaften Weiterbildung der Clients und/oder des Servers ist die Prozesspipeline in einem Format verpackt ist, wobei das Format ein binäres Format ist, das die Prozesspipeline in einem gerichteten, azyklischen Graphen beschreibt, oder das Format ein Bytecode ist, der zur Ausführung in einer virtuellen Maschine geeignet ist.

Durch den Einsatz eines binären Formates oder eines Bytecodes für die Prozesspipeline kann der Speicherbedarf, die Übermittlungsgeschwindigkeit und die Sicherheit erhöht werden.

In einer vorteilhaften Weiterbildung der Clients und/oder des Servers ist die Prozesspipeline und/oder mindestens einer der Ausgabendatensätze verschlüsselt, oder verschlüsselt und signiert, und von den Clients entschlüsselbar, oder entschlüsselbar und verifizierbar.

Durch die Verschlüsselung der Prozesspipeline und/oder der Ausgabendatensätze kann die Datensicherheit erhöht werden. Durch das Signieren und Verifizieren kann beispielsweise die Verwendung nur durch berechtigte Anwender sichergestellt werden.

In einer dritten Ausführungsform wird ein System zum föderalen Rechnen nach Anspruch 8 bereitgestellt.

In einer vierten Ausführungsform wird ein computerimplementiertes Client-Verfahren zum föderalen Rechnen für einen Client nach Anspruch 9 bereitgestellt.

In einer fünften Ausführungsform wird ein computerimplementiertes Server-Verfahren zum föderalen Rechnen für einem Server nach Anspruch 12 bereitgestellt.

Durch den Einsatz der Eingabedatenschemata kann eine besser geeignete Prozesspipeline erzeugt werden und zum Einsatz kommen, wodurch das föderale Rechnen insgesamt verbessert wird. Dies gilt sowohl für das Client-Verfahren als auch das Server-Verfahren.

Die vorteilhaften Weiterbildungen der ersten und zweiten Ausführungsform können auch auf die vierte und fünfte Ausführungsform angewendet werden.

In einer sechsten Ausführungsform wird ein computerimplementiertes Verfahren zum föderalen Rechnen nach Anspruch 17 bereitgestellt.

In einer siebten Ausführungsform wird ein Computerprogramm-Produkt nach Anspruch 18 bereitgestellt.

In einer vorteilhaften Weiterbildung des Computerprogramm-Produkts umfasst dieses ein computerlesbares Medium, auf dem die Softwarecode-Abschnitte gespeichert sind, wobei das Programm direkt in einen internen Speicher der Datenverarbeitungsvorrichtung ladbar ist.

Zum besseren Verständnis der Erfindung wird diese anhand der nachfolgenden Figuren näher erläutert. Es zeigen jeweils in stark vereinfachter, schematischer Darstellung:
- Fig. 1: einen beispielhaften Aufbau eines erfindungsgemäßen Systems umfassend mehrere Clients und einen Server;
- Fig. 2: beispielhafte Flussdiagramme der erfinderischen Verfahren; und
- Fig. 3: ein beispielhaftes Sequenzdiagramm der Erfindung.

Einführend sei festgehalten, dass in den unterschiedlich beschriebenen Ausführungsformen gleiche Teile mit gleichen Bezugszeichen versehen werden, wobei die in der gesamten Beschreibung enthaltenen Offenbarungen sinngemäß auf gleiche Teile mit gleichen Bezugszeichen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

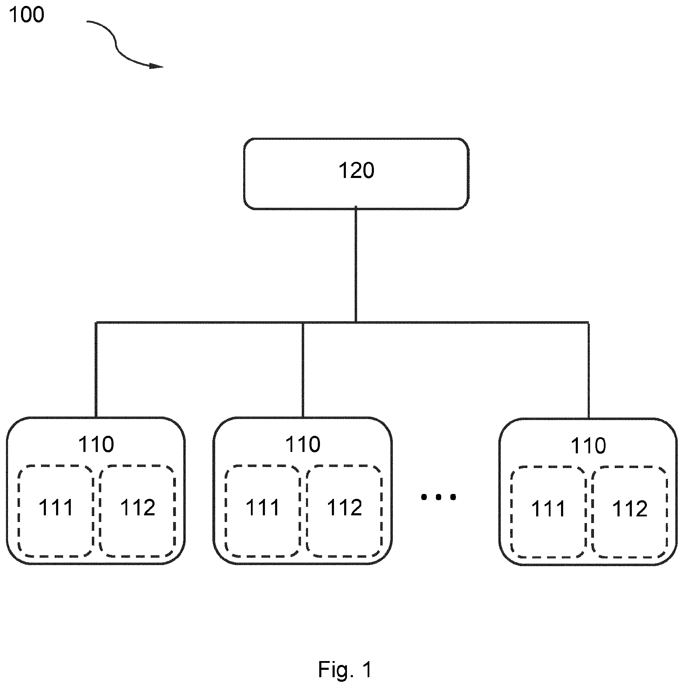

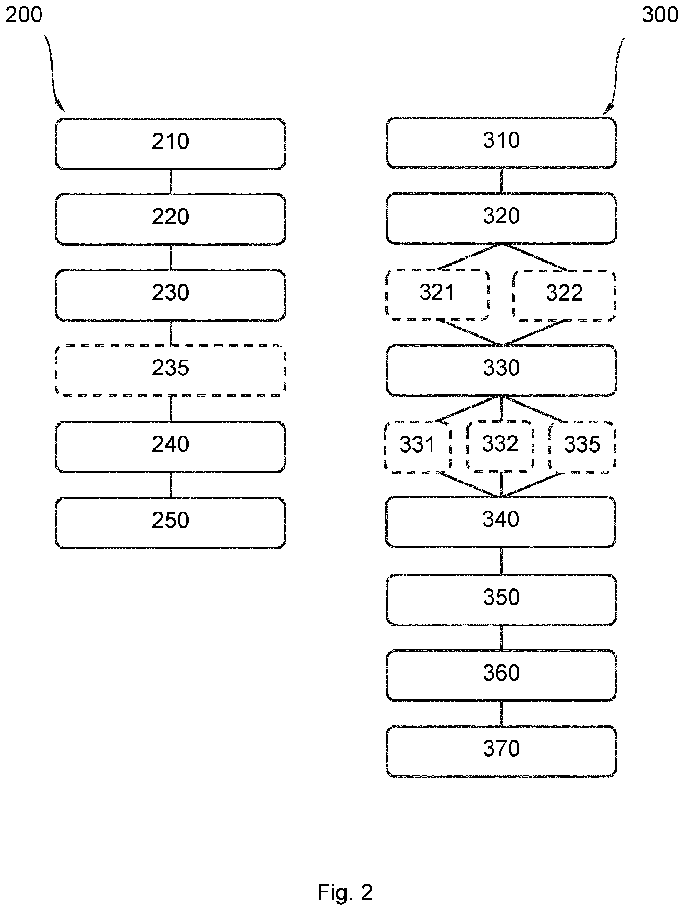

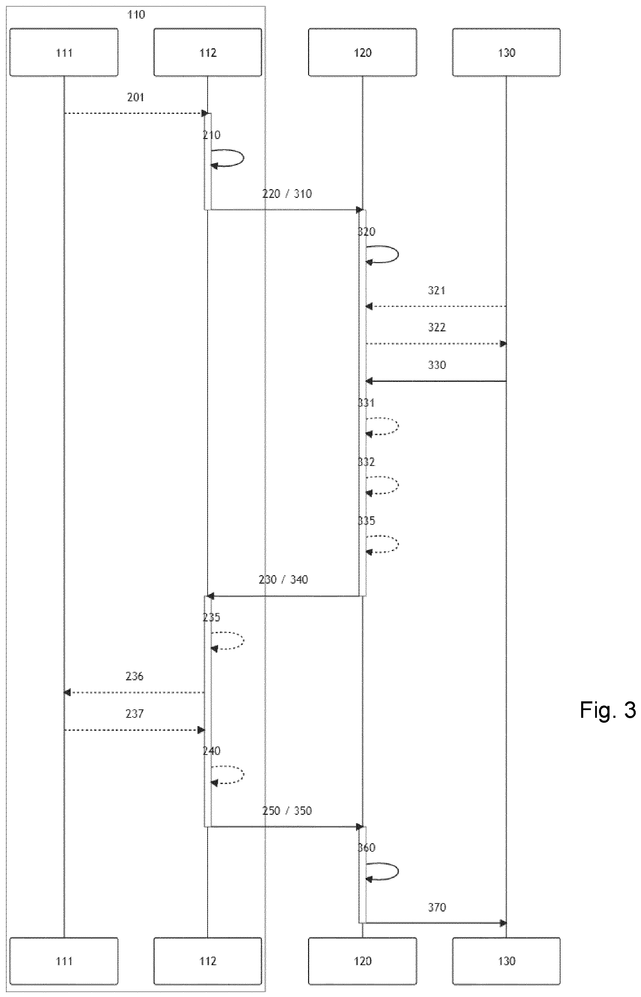

Im Folgenden werden die Vorrichtungen und Verfahren anhand der Fig. 1 zusammen mit den Figs. 2 und 3 erläutert. Optionale Ausgestaltungen und Weiterbildungen sind in der Regel gestrichelt dargestellt.

Die Vorrichtungen, Clients 110 und Server 120, können sich dabei an verschiedenen Orten befinden, und über eine Datenverbindung miteinander verbunden sein. Diese Datenverbindung kann hierbei das Internet sein oder auch eine dedizierte kabelgebundene oder kabellose Datenverbindung. Es ist auch denkbar, dass die Daten zwischen den Clients 110 und dem Server 120 durch ein Datenmedium, wie beispielsweise einem USB-Stick oder als E-Mail-Anhang übertragen werden.

Jeder der Clients 110 kann sich zum Beispiel bei einer Firma befinden, die bei einem föderalen Rechenprojekt teilnehmen möchte. Der Server 120 kann sich in diesem Beispiel an einer anderen Stelle befinden, z.B. bei einem Dienstleister oder einer Forschungseinrichtung. In der Fig. 1 sind beispielhaft drei Clients 110 abgebildet, es ist jedoch jede Anzahl an Clients 110 denkbar. Als Client 110 soll hierbei eine Einheit bezeichnet werden, die sich sowohl auf eine Vorrichtung, beispielsweise einen Computer beziehen kann, der die alleinige Aufgabe hat, am föderalen Rechnen teilzunehmen. Der Client kann dann aus einer Speichereinheit 111, in der die Daten für das föderale Rechnen gespeichert sind, und einer Recheneinheit 112, die die Aufgaben der Kommunikation und Berechnung vornimmt. In einem optionalen Schritt 201 können die Daten aus der Speichereinheit 111 in die Recheneinheit 112 geladen werden. Alternativ kann ein Client 110 auch als Programm ausgestaltet sein, das eine Person in einer Firma - in obigem Beispiel - auf einem bereits vorhandenen Rechner installiert, auf dem beispielsweise die Eingabedaten gespeichert sind. So ein Programm kann beispielsweise auch im Hintergrund als sog. Service oder Daemon ablaufen, ohne Interaktion mit Benutzern. Die Eingabedaten können auch hier im Schritt 201 in den Client 110 geladen werden, so dass der Client für die Aufgaben des föderalen Rechnens vorbereitet ist. Unter Recheneinheit 112 kann beispielsweise eine CPU, engl. Central Processing Unit, oder GPU, engl. Graphics Processing Unit, verstanden werden, alternativ aber auch eine Virtuelle Maschine oder eine Laufzeitumgebung.

Konkret speichert die Speichereinheit 111 die Eingabedatensätze. Die Recheneinheit 112 erhält die Eingabedatensätze von der Speichereinheit 111, extrahiert die Eingabedatenschemata aus den Eingabedatensätzen, überträgt die Eingabedatenschemata an den Server 120, empfängt die Prozesspipeline vom Server 120, erzeugt aus den Eingabedatensätzen anhand der Prozesspipeline die Ausgabedatensätze, und überträgt die Ausgabedatensätze an den Server 120.

Ist ein Client 110 in eine Speichereinheit 111 und eine Recheneinheit aufgeteilt, so können sich die Speichereinheit 111 und die Recheneinheit 112 in einer Datenverarbeitungsvorrichtung, also z.B. einem Computer, befinden. Alternativ ist eine Anordnung vorstellbar, dass sich die Speichereinheit 111, wovon es auch mehrere geben kann, und die Recheneinheit 112 in mehreren, verschiedenen, jedoch durch einen privilegierten Übertragungsweg miteinander verbundenen, Datenverarbeitungsvorrichtungen befinden. Ein privilegierten Übertragungsweg könnte beispielsweise ein besonders geschütztes Firmennetzwerk oder ein nicht mit dem Internet verbundene Gruppe von Vorrichtungen sein.

Jeder der Clients 110 kann also einen oder mehrere Eingabedatensätze speichern. Diese Eingabedatensätze können beispielsweise Maschinendaten einer Produktionsmaschine sein, wie etwa eine Fräse, oder Produktionsdaten aus der Produktion von Batterien oder Halbleitern. Diese Produktionsdaten können Koordinaten, Fahrtwege, Wartungszeiten und Betriebszeiten von Werkzeugen sein oder Messungen, Toleranzen, erfasste Fehler oder Ähnliches in der Produktion betreffen. Auch andere Daten wie Arbeitsschritte, Werkzeugtypen, etc. können sich in der Eingabedaten finden.

Jeweils zusammengehörende Daten, beispielsweise einer Maschine, eines Vorgangs oder Ähnliches wird als ein Eingabedatensatz bezeichnet.

Ein Client 110 extrahiert im Schritt 210 aus jedem Eingabedatensatz ein Datenschema. Ein Datenschema stellt einen Kontext sowohl über eine Beschreibung als auch über Eigenschaftsnamen der Eingabedaten bereit. Tabelle 1 zeigt ein generisches, beispielhaftes Datenschema.

**Tabelle 1**

| |
|---|
| ``` { "type": "object", "properties": { "foo": { "type": "string", "format": "string" } }, "required": [ "foo" ] } ``` |

In Tabelle 2 wird ein Beispiel gezeigt, das einen Auszug aus einem Forschungsprojekt zur Anbindung von Maschinenwerkzeugdatenbeschreibt.

**Tabelle 2**

| |
|---|
| ``` { "$schema": "http://schema.katulu.io.com/_/draft-01", "$id": "https://schema.katulu.io/example/uniwear", "title": "Uniwear", "description": "A multi-material machine tool wear dataset for prognostics and health monitoring.", "type": "object", "properties": { "timestamp": { "type": "string", "format": "date-time" } "vibration_x": { "type": "number", "format": "float64" }, "vibration_y": { "type": "number", "format": "float64" }, "vibration_z": { "type": "number", "format": "float64" }, ... "tool_wear": { "description": "Wear measured in mm", "type": "number", "format": "float64", "unit": "mm" }, }, ``` |
| ``` required": [ "timestamp", "vibration_x", "vibration_y", "vibration_z", ... "tool_wear" ] } ``` |

Hierbei referenziert das Schlüsselwort "$schema" das zu verwenden Meta-Schema welches beispielsweise ein bestehendes JSON Schema um das Schlüsselwort, engl. keyword, "unit" erweitert, um Einheiten zu erfassen.

Die Schlüsselworte "title" sowie "description" werden genutzt, um Metadaten zu erfassen. Mithilfe der Eigenschaften, mit "properties" bezeichnet, werden die Eigenschaften eines Datums, d.h. eines Wertes, beschrieben, ähnlich zu Spalten einer Tabelle. Durch die Eigenschaft "tool_wear" wird die Definition von Format, Datentyp, sowie Einheit als auch Metadaten veranschaulicht.

Beispielhaft sind die Schemata hier durch eine Teilmenge des offenen JSON-Schema-Standards dargestellt. Durch das Verwenden von offenen Schema-Standards können vorhandene Werkzeuge verwendet werden und maximale Kompatibilität mit anderen Systemen gewährleistet werden. Andere Schema-Standards können gleichermaßen verwendet werden.

Um die begrenzten Möglichkeiten des Datenzugriffs auf die Eingabedatensätze für das föderale Rechnen zu erweitern, ist eine effiziente Methode erforderlich, um die Datenschemata zu extrahieren und im Server registrieren zu können.

Sogenannte Datenkonnektoren können zur Vereinfachung dienen, um Daten verschiedener Art und verschiedener Quellen in ähnlicher Weise zu registrieren und gemeinsam verarbeitbar zu machen.

Konnektoren bieten die Möglichkeit, Schemata automatisch aus den bereitgestellten Daten zu extrahieren und (zu einem späteren Zeitpunkt) die Daten zu laden, damit sie bei der Erzeugung der Ausgabedatensätze aus den Eingabedatensätzen anhand der Prozesspipeline verwendet werden können.

Beispiele solcher Konnektoren sind SQL-Konnektoren, die zu SQLite, MSSQL, PostgreSQL und anderen Datenbanken kompatibel sind, Industriestandard-Konnektoren wie OPC UA und MQTT für Fertigungssysteme, Konnektoren zum Lesen von Bilddaten von Festplatten, Test-Konnektoren zum Laden von Daten aus Parquet-Dateien oder CSVs.

Die Datenschemata werden sowohl aus den verfügbaren Datenquellentypinformationen, also welcher Art ist die Datenquelle und die Informationen darauf, als auch aus Stichprobendaten aus den Eingabedatensätzen extrahiert. Die Schemata können auch anhand Typdefinitionen wie verschiedenen Zahlentypen, Datumsformaten, UUIDs usw. auf Korrektheit geprüft werden.

Die extrahierten Eingabedatenschemata werden vom Client 110 an den Server 120 im Schritt 220 übertragen. Um die Sicherheit bei einer Übertragung über einen unsicheren Kanal, beispielsweise das Internet, zu erhöhen, können die zu übertragenen Schemata mithilfe konventioneller Verschlüsselungstechniken geschützt werden. Auch ein Signieren oder beiden zusammen ist möglich.

Auf der Serverseite empfängt der Server 120 im Schritt 310 die von den Clients 110 eingesendeten Eingabedatenschemata. Im Schritt 320 registriert der Server 120 die empfangenen Eingabedatenschemata. Dies kann in einer Datenbank, einer Textdatei, oder in einer anderen geeigneten Form durchgeführt werden. Mit dem Registrieren wird im Server 120 eine Zuordnung der Eingabedatenschemata und den Clients 110 auf denen die entsprechenden Eingabedatensätze gespeichert sind geschaffen.

Dadurch, dass die Eingabedatenschemata der Eingabedatensätze im Server 120 registriert sind, ist es insbesondere möglich, die vorhandenen Eingabedatensätze mehrfach, beispielsweise auch für Anwendungen verschiedener Art zu verwenden, ohne erneut das Pre-Processing durchführen zu müssen. Beispielsweise kann der gleiche Eingabedatensatz in einem Fahrzeug somit zuerst verwendet werden, um ein Modell zum Erkennen von Verkehrszeichen zu trainieren, und dann, um eine Analyse des aufgezeichneten Verkehres durchzuführen. Dadurch wird unter anderem Energie gespart, da eine mehrfache Übertragung der Informationen über die zur Verfügung stehenden Eingabedatensätze vermieden werden kann. Dadurch wird auch eine Einsparung von Speicherplatz ermöglicht, da diese Informationen auch auf Datenträgern abgelegt werden. Sowohl durch die Energieeinsparung also auch die Reduktion von benötigtem Speicherplatz wird - über alle Vorrichtungen gesamt betrachtet - auch der Ausstoß von CO2 reduziert.

In einem optionalen Schritt 321 kann ein Benutzer 130 vom Server 120 eine Anfrage stellen, auf die hin der Server 120 in Schritt 322 die registrieren Eingabedatenschemata ausgibt. Dies kann eine vollständige Liste der registrieren Eingabedatenschemata sein, oder, falls die Anfrage entsprechende Kriterien umfasst, nur die registrieren Eingabedatenschemata enthalten, die den Kriterien entsprechen.

Der Benutzer 130 kann - entweder nach Erhalten der Liste der registrierten Eingabedatenschemata in Schritt 322 oder auch ohne die Anfrage durchgeführt zu haben - eine Prozesspipeline an den Server 120 senden oder an diesem direkt eingeben. Die Prozesspipeline wird vom Server 120 im Schritt 330 erhalten.

Die Prozesspipeline basiert auf einem Prozessdatenschema, das den Anforderungen des Benutzers 130 für die beabsichtigte Aufgabe des föderalen Rechnens entspricht. Das Prozessdatenschema kann hierbei basierend auf den in Schritt 322 erhaltenen registrierten Eingabedatenschemata konfiguriert werden.

Eine Prozesspipeline definiert die Rechenvorschriften, die auf den Eingabedaten auszuführen sind. Alle darin festgelegten Vorgänge - auch Operationen genannt - werden mit Typinformationen versehen, sodass die Kompatibilität zwischen den Vorgängen untereinander sowie mit dem Prozessdatenschema, auf dem die Prozesspipeline basiert überprüft werden kann. Dies kann beim Kompilieren, im Rahmen anderer Verarbeitungsschritte oder gesondert geschehen. Das Typsystem der Typinformationen ermöglicht einen strukturellen Vergleich zwischen einzelnen Typen, die in den Eingabedatenschemata für die Eingabedatensätze definiert sind.

Ein Eingabedatensatz kann beispielsweise aus einer Reihe von Längen-Messwerten und zugehörigen Zeitdaten bestehen. Als Typ könnte dann festgelegt werden: {Länge, Zeit}. Der Eingabedatensatz hat dann Daten vom Type Länge und Daten vom Typ Zeit.

Eine Operation zur Auswahl eines bestimmten Merkmals, d.h. Features, erfordert, dass das Merkmal vorhanden ist, die als Eingabetyp, d.h. Typ von Eingabedaten, beschrieben ist. Der Ausgabetyp, d.h. der Type von Ausgabedaten, der Operation ist dann das Ergebnis der Anwendung der Operation auf den Eingabetyp. Bei schleifenartigen Operationen kann der entstehende Ausgabetyp, d.h. die aus der Operation resultierenden Ausgabedaten, gegebenenfalls wiederum als Eingabe für die nächsten Schleife der Operationen verwendet werden.

Dadurch kann über die Prozesspipeline die Merkmalsextraktion beim föderalen Rechnen eingesetzt werden, da über die Prozesspipeline bereits vor der Übermittlung der Prozesspipeline von dem Server 120 an die Clients 110 eine Übereinstimmung der Eingabedatenschemata mit dem Prozessdatenschema sichergestellt werden kann. Nur dadurch wird es auch möglich, dass die Merkmalsextraktion als eine oder mehrere Operationen als Teil der Prozesspipeline mitübermittelt wird. Daraus erst resultiert auch die Möglichkeit der einfachen Wiederverwendbarkeit der Eingabedatensätze, da die Merkmalsextraktion nicht über - wie bisher üblich - das Pre-Processing in den jeweils für jede Anwendung gezielt vorbereiteten Eingabedatensätzen gespeichert ist. Dadurch wird auch offensichtlich, dass nicht verschiedene - jeweils für eine Anwendung gesondert vorbereitete - Versionen der verfügbaren Eingabedatensätze gespeichert werden müssen, sondern es ausreicht, das Datenschema jedes Eingabedatensatzes nur einmal zu extrahieren.

Im Folgenden werden in Auszügen in Tabelle 3 als Beispiel einfache Varianten eines Modells und einer Prozesspipeline zur Vorhersage des Werkzeugverschleißes basierend auf Kraft und Vibration dargestellt.

Abfrage des Eingabeschemas des Servers 120 durch einen Benutzer 130 in Schritt 321:

```
with connect(SERVER_URL) as session:
 dataset = session.find_dataset(name="uniwear")
 source = Source(dataset)
```

Definition der Operationen zum Aufbereiten der Eingabedaten sowie zur Extraktion von Merkmalen im Rahmen der Prozesspipeline:

```
inputs = source|Zip(Select("timestamp", "vibration_x",
  "vibration_y", ...), Select("vibration_x",
  "vibration_y", ...)|Skew(), Select("vibration_x",
  "vibration_y", ...)| SNR() } | Cast(to=Float32)|
  Normalize()
targets = source | Select("tool_wear") | Cast(to=Float32)
 Normalize()
```

### Definition des Modells unter Verwendung des PyTorch Frameworks. Die Funktion

"shape(inputs)" referenziert hier die Ausgabe des letzten Schritts zur Aufbereitung (z.B. auch Merkmals-Extraktion) der Eingabedaten:

```
model = torch.nn.Sequential(
   torch.nn.Linear(shape(inputs), 10),
   torch.nn.Sigmoid(),
   torch.nn.Linear(10, 14),
   torch.nn.Sigmoid(),
   torch.nn.Linear(14, 1),
}
```

Diese Definition kann ebenfalls in der Prozesspipeline umfasst sein.

Konfiguration von Parameter zum maschinellen Lernen sowie die Definition der vollständigen Prozesspipeline (auch Workload genannt):

```
     BATCH_SIZE = 30
     NUM_ROUNDS = 12
     LEARNING_RATE = 1e-3

     workload = build_workload(
            name="uniwear",
            inputs=inputs,
            targets=targets,
            model=model_from_torch(model, torch.randn(BATCH_SIZE,
                   INPUT_SHAPE)),
            config=WorkloadConfig(
                   num_rounds=NUM_ROUNDS,
                   batch_size=BATCH_SIZE,
                   optimizer=Adam(learning_rate=LEARNING_RATE),
                   loss_function="mse",
                   metrics= ["mse"],
            ),
     )
```

Im Folgenden Code wird in der ersten Zeile in einer Session auf dem Server die Prozesspipeline (d.h. Workload) übergeben (entspricht Schritt 330), an die Clients 110 übertragen (entspricht Schritt 230 und 340) und nach Erhalt der Ausgabedaten werden in der zweiten Zeile die aggregierten Ausgabedaten (Schritt 370) bereitgestellt:

**Tabelle 3**

| |
|---|
| ``` results = session.run(workload) print(results) ``` |
| Zusätzlich zu den Ausgabedaten können auch Metriken zur Bewertung der Ausgabedaten enthalten sein. |

In Tabelle 4 werden als Beispiel einfache Varianten eines Modells und einer Prozesspipeline zum Klassifizieren von Netzwerk-Verkehr dargestellt.

**Tabelle 4**

| |
|---|
| ``` with connect (SERVER _URL) as session: dataset = session.find_sources(name="iot_netflow") source = Source(dataset) inputs = source \| Select( "id.orig_h", "id.orig_p", "id.resp_h", "id.resp_p", "duration", "orig_bytes", "resp_bytes", "missed_bytes", "orig_pkts", "orig_ip_bytes", "resp_pkts", "resp_ip_bytes", ) \| Cast(to=Float32) \| Normalize() targets = source \| Select("label") \| EncodeLabels(labels=["Benign", "Malicious"], values=[0, 1]) model = torch.nn.Sequential( torch.nn.Linear(shape(inputs), 40), torch.nn.ReLU(), torch.nn.Linear(40, 38), torch.nn.ReLU(), torch.nn.Linear(38, 1), ) BATCH_SIZE = 512 ``` |
| ``` workload = build_workload( name="iot_netflow", inputs=inputs, targets=targets, model=model_from_torch(model, torch.randn(BATCH_SIZE, INPUT_SHAPE)), config=WorkloadConfig( num_rounds=5, batch_size=BATCH_SIZE, optimizer=Adam(learning_rate=1e-3), loss_function="binary_crossentropy", metrics=["accuracy"], ), ) results = session.run(workload) print (results) ``` |

Die folgenden Überlegungen können ebenfalls berücksichtigt werden:
Ein System für föderales Rechnen, bei dem der Server 120 keinen Zugriff auf direkte Pipeline-Ergebnisse (einschließlich Fehlerberichte) hat, ist Voraussetzung für verschiedene Anwendungen wie datenschutzkonformen föderierten Rechnen, wie z.B. bandbreitenfreundliches Maschinenlernen.

Idealer Weise unterstützt die Pipeline nur eine begrenzte Anzahl bekannter Operationen. Dadurch wird die Ausführung willkürlichen Codes mit potenziell hohen Sicherheits- und Datenschutzrisiken erschwert. Alternativ können die Operationen eingeschränkt werden (z.B. durch Sandboxing). Dadurch wird ein statisches Validieren und das Behandeln von Fehlern jedoch unnötig erschwert.

Die Pipeline kann erstellt und anhand des Eingabedatenschemas statisch überprüft werden, um sicherzustellen, dass Daten und Datenvorgänge kompatibel sind. Dadurch wird gewährleistet, dass das Abarbeiten der Pipeline nicht fehlschlägt, solange alle übergebenen Eingabedaten mit dem Prozessdatenschema der Pipeline übereinstimmen.

Jede verwendete Operation der Prozesspipeline muss deterministisch sein, um eine Bewertung der resultierenden Ausgabedatensätze sowie mehrfache Ausführung zu ermöglichen. Hierfür können beispielsweise beim Erstellen der Pipeline Zufallszahlen (sog. Seeds) definiert werden. Der Client 110, bzw. die Recheneinheit 112, kann die Daten gegen das Eingabedatenschema prüfen und dann nur passende Daten, d.h. Eingabedatensätze deren Schema mit dem Prozessdatenschema übereinstimmen, an die Prozesspipeline weitergeben.

Im Schritt 331 wird die Prozesspipeline gegen verfügbare Datenschema geprüft, d.h. ob die Pipeline auf den zugehörigen Datensätzen ausführbar ist. Es kann beispielsweise ein Prüfen der Ausführbarkeit gegen alle registrierten Eingabedatenschemata, gegen einen Teil der registrierten Eingabedatenschemata, die beispielsweise bestimmten Kriterien entsprechen, oder auch gegen ein gesondert zur Verfügung gestelltes Datenschema, wie beispielsweise das Prozessdatenschema, durchgeführt werden. Dadurch, dass die Prozesspipeline auf einem Prozessdatenschema basiert, kann überprüft werden, ob alle Vorgänge der Pipeline auf die jeweilige Datenquelle, die ein entsprechendes Schema aufweist, anwendbar sind, und es kann sichergestellt werden, dass die Eingabedaten mit der Pipeline kompatibel sind, indem während des Verarbeitens der Prozesspipeline die aktuellen Eingabedatensätze anhand des Prozessdatenschemas validiert werden.

Im Schritt 332, der ebenfalls optional ist, und auch vor dem Schritt 331 durchgeführt werden kann, wird die Prozesspipeline in ein Format verpackt. Die Pipeline kann auch bereits in diesem Format verpackt vom Benutzer 130 erhalten werden. Das Format kann hierbei beispielsweise ein binäres Format sein, das die Prozesspipeline in einem gerichteten, azyklischen Graphen beschreibt. Alternativ kann das Format ein Bytecode sein, der zur Ausführung in einer virtuellen Maschine geeignet ist.

Weitere Details bzw. Alternativen sind sogenannte Docker-Container, was den Vorteil hat, dass der Benutzer 130 bei der Merkmalsextraktion vorhandene Werkzeuge einsetzen kann. Auch kann zum Verpacken Webassembly, WASM, eingesetzt werden, wodurch ein gesichertes Ablaufen (Sandboxing) ermöglicht wird, und die resultierenden Binärdateien normaler Weise kleiner sind. Es könnte auch das Python Pickle-Modul genutzt werden, wobei hier gegebenenfalls weitere Schritte zur Herstellung einer sicheren Ausführung ergriffen werden müssten.

Das Binärformat kann beispielsweise auf auch auf dem ONNX-Standard (Open Neural Network Exchange-Standard) aufgebaut werden welches Protocol Buffers zur Serialisierung strukturierter Daten verwendet. Durch die Verwendung eines Binärformats welches auch für die Übertragung von Lern-Modellen optimiert wurde kann die Laufzeitkomplexität reduziert werden da manche der Operation gleichermaßen für die Modelle als auch Datenaufbereitung verwendet werden kann.

Es sollte auch erwähnt werden, dass die Prozesspipeline auf eine vorgefertigte Liste von Operationen beschränkt werden kann. D.h. nur die Operationen von dieser Liste werden von den Clients 110 unterstützt. Mit so einer begrenzten Anzahl von unterstützten Operationen wird das Ausführen von ungewünschtem oder bösartigem Code erschwert.

Schließlich kann die Pipeline im Schritt 335 die Prozesspipeline durch bekannte Verschlüsselungstechniken verschlüsselt werden, um für die nachfolgende Übertragung besser geschützt zu sein. Alternativ kann statt dem reinen Verschlüsseln auch ein Verschlüsseln und Signieren durchgeführt werden, so dass neben der Unveränderlichkeit der Prozesspipeline auch ein Herkunftsnachweis möglich ist. Auch ein reines Signieren ist im Schritt 335 möglich.

Die Prozesspipeline kann auch bereits verschlüsselt und/oder signiert vom Server 120 erhalten werden. Die Verschlüsselung und/oder Signatur kann dann vom Benutzer bzw. einem vorgeschalteten Rechner angebracht werden. In diesem Sinne kann vom Benutzer 130 zu den Clients 110 eine Ende-zu-Ende-Verschlüsselung implementiert werden, um die Datensicherheit weiter zu erhöhen.

Im folgenden Schritt 340 wird die Prozesspipeline an einen oder mehrere der Clients 110 übermittelt. Hierbei kann Bandbreite gespart werden, wenn nur an die Clients 110 die Prozesspipeline übermittelt wird, für die überhaupt Eingabedatenschemata im Server 120 registriert sind, die mit dem Prozessdatenschema, auf dem die Prozesspipeline basiert übereinstimmen. Die notwendige Übereinstimmung muss dabei nicht vollständig sein, sondern kann mit einem Parameter eingestellt werden, so dass eine gewissen Ähnlichkeit - je nach Parameter - ausreicht, um einen Client 110 zu der Gruppe von Clients 110 hinzuzufügen, die die Prozesspipeline erhalten.

In den Clients 110 die die Prozesspipeline erhalten, wird diese im Schritt 230 empfangen. Wie bereits zuvor beschrieben, kann die Übertragung über eine Datenkommunikation stattfinden, die kabelgebunden oder kabellos ist, das Internet oder über ein Speichermedium.

Sollte die Prozesspipeline vor der Übertragung verschlüsselt worden sein, so kann ein Client 110, der die Prozesspipeline empfangen hat, diese im optionalen Schritt 235 wieder entschlüsseln. Wurde die Prozesspipeline signiert, kann der Client 110 hierbei die Herkunft prüfen.

Im Schritt 240 erzeugt jeder der Clients 110, der die Prozesspipeline erhalten hat, aus jeweils einem der Eingabedatensätze, deren Eingabedatenschema mit dem Prozessdatenschema übereinstimmt, einen Ausgabedatensatz. Die Übereinstimmung muss nicht, wie zuvor bereits beschrieben, vollständig sein.

Der Schritt 240 stellt somit das eigentliche Rechnen beim föderalen Rechnen dar. Das Rechnen im Schritt 240, also das Erzeugen der Ausgabedatensätze kann je nach vorhandenen Eingabedatensätzen und Prozesspipeline ein Maschinenlernen darstellen. Dabei werden die Eingabedatensätze als Trainingsdaten verwendet, wobei die Prozesspipeline sowohl das Aufbereiten der Daten als auch das Lernen beschreibt. Die Ausgabedatensätze stellen dann ein trainiertes Modell dar. Die Prozesspipeline kann weiterhin eine Modell-Architektur umfassen, so dass das trainierte Modell einer vorgegebenen Architektur entspricht. Architekturen können beispielweise das Schichtenmodel eines neuronalen Netzwerks umfassen. Jeder Ausgabendatensatz eines Clients 110 kann auch nur einen Teil eines trainierten Modells darstellen, das der Client 110 vor der Übermittlung an den Server zu einem einzigen trainierten Modell zusammenfasst.

Je nachdem, ob der Client 110 die Eingabedaten bereits gespeichert hat, beispielsweise durch den optionalen Schritt 201, wie zuvor ausgeführt, kann der Client 110, bzw. die Recheneinheit 112 des Clients 110, auch erst zu diesem späteren Zeitpunkt im Schritt 236 entsprechende Eingabedatensätze anfordern. Die Anforderung kann an Speichereinheiten 111 oder auch an Anwender oder andere Computer gerichtet sein. Im folgenden Schritt 237 werden die angeforderten Eingabedatensätze dem Client 110, bzw. der Recheneinheit 111, zur Verfügung gestellt.

Die Anforderung kann zum Ergebnis eine vollständige Liste der vorhandenen Eingabedatensätze sein, oder, falls die Anforderung entsprechende Kriterien umfasst, nur die verfügbaren Eingabedatensätze enthalten, die den Kriterien entsprechen. Solche Kriterien können beispielsweise aus der Prozesspipeline entnommen werden, und eine Übereinstimmungsprüfung der Eingabedatenschemata der Eingabedatensätze mit dem Prozessdatenschema ermöglichen.

Als Beispiel kann eine Fabrik mit mehreren Fräsmaschinen ausgeführt werden. Jede der Maschinen kann ihre eigenen historischen Verlaufs- und Messdaten umfassen, und die Prozesspipeline wird vom Client 110 eingesetzt, um für jede der Maschinen ein Teil-Modell zu trainieren, um beispielsweise die Fahrtwege zu optimieren oder den Materialausschuss zu verringern. Die so erzeugten Teilnetzwerke können vom Client 110 zusammengefasst und an den Server 120 übermittelt werden.

Ein weiteres Beispiel ist eine Materialanalyse, bei der verschiedene Einrichtungen Messwerte zu Werkstoffen gespeichert haben, und die Prozesspipeline ein entsprechendes Analyseverfahren beschreibt. Die Clients 110 analysieren die lokal vorhandenen Datensätze und geben die Ergebnisse als Ausgabedatensätze zurück.

Im Schritt 250 werden dann die von den Clients 110 erzeugten Ausgabedatensätze an den Server 120 übertragen. Auf der Serverseite empfängt der Server 120 die Ausgabedatensätze von einem oder mehreren Clients 110 in Schritt 350.

In einem in den Figuren nicht gezeigten Schritt können analog zum bereits beschriebenen Verschlüsseln der Eingabedatenschemata und der Prozesspipeline auch die Ausgabedatensätze von den Clients 110 verschlüsselt und alternativ oder zusätzlich signiert werden. Der Server 120 kann dann die empfangenen Ausgabedatensätze entschlüsseln und die Herkunft prüfen. Auch die aggregierten Ausgabedatensätze können auf diese Weise verschlüsselt und/oder signiert werden, so dass beispielsweise nur berechtigten Personen der Inhalt des föderalen Rechnens zugänglich gemacht werden kann, wodurch ebenfalls die Datensicherheit erhöht wird.

Im folgenden Schritt 360 aggregiert der Server 120 die für eine Prozesspipeline empfangenen Ausgabedatensätze zu einem Gesamtergebnis und stellt dieses, d.h. die aggregierten Ausgabedatensätze, an den Benutzer 130 im Schritt 370 bereit.

Im zuvor ausgeführten Beispiel würde der Server solche Ergebnisse von mehreren Firmen empfangen und zu einem gesamten trainierten Netzwerk aggregieren, wodurch sich die Qualität signifikant steigern lässt, da um ein Vielfaches mehr Trainingszyklen ausgeführt wurden. Gleiches kann für die Analyseergebnisse von mehreren Clients 110 durchgeführt werden.

Ein System 100 besteht aus einem Server 120 und einem oder mehreren Clients 110, wobei die Clients 110 und der 120 eine der zuvor beschriebenen Ausgestaltungen aufweisen kann.

Die Erfindung wird auch durch ein gemeinsames Verfahren verwirklicht, das sowohl die Schritte des Server 120 als auch Clients 110 umfasst.

Eine weitere Ausführungsform ist ein Computerprogrammprodukt, das Befehle umfasst, die bei der Ausführung des Programms durch einen Computer diesen veranlassen, eines der oben dargelegten Verfahren auszuführen.

Eine weitere Ausführungsform ist ein computerlesbares Medium, auf dem das Computerprogrammprodukt gespeichert ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 100: System
- 110: Client
- 111: Speichereinheit
- 112: Recheneinheit
- 120: Server
- 130: Benutzer
- 201: Laden von Daten
- 210: Extrahieren von Eingabedatenschemata
- 220: Übertragen von Eingabedatenschemata
- 230: Empfangen einer Prozesspipeline
- 235: Entschlüsseln der Prozesspipeline
- 240: Erzeugen von Ausgabedatensätzen
- 250: Übertragen der Ausgabedatensätze
- 310: Empfangen von Eingabedatenschemata
- 320: Registrieren von Eingabedatenschemata
- 321: Erhalten von Anfragen
- 322: Ausgeben von registrierten Eingabedatenschemata
- 330: Erhalten einer Prozesspipeline
- 331: Prüfen der Prozesspipeline
- 332: Verpacken der Prozesspipeline
- 335: Verschlüsseln der Prozesspipeline
- 340: Übermitteln der Prozesspipeline
- 350: Empfangen von Ausgabedatensätzen
- 360: Aggregieren der Ausgabedatensätze
- 370: Bereitstellen der Ausgabedatensätze

## Patentansprüche

1. Vorrichtung als Client (110) für ein föderales Rechensystem (100), die dazu eingerichtet ist,
einen oder mehrere Eingabedatensätze zu speichern;
aus jedem Eingabedatensatz ein Eingabedatenschema zu extrahieren, wobei jedes Eingabedatenschema sowohl aus verfügbaren Datenquellentypinformationen als auch aus Stichprobendaten aus dem Eingabedatensatz extrahiert wird;
die extrahierten Eingabedatenschemata an einen Server (120) zu übertragen, auf welchem die Eingabedatenschemata registriert werden;
vom Server (120) eine Prozesspipeline zu empfangen, die auf einem Prozessdatenschema basiert, das den Anforderungen eines Benutzers (130) für eine beabsichtigte Aufgabe föderalen Rechnens entspricht, wobei die Ausführbarkeit der Prozesspipeline für die registrierten Eingabedatenschemata vom Server (120) geprüft wird;
anhand der Prozesspipeline aus einem oder mehreren der Eingabedatensätze, deren Eingabedatenschema mit dem Prozessdatenschema übereinstimmt, jeweils einen Ausgabedatensatz zu erzeugen; und
die erzeugten Ausgabedatensätze an den Server (120) zu übertragen.

2. Vorrichtung nach Anspruch 1, weiterhin umfassend eine Speichereinheit (111) und eine Recheneinheit (112), wobei
die Speichereinheit (111) dazu eingerichtet ist, die Eingabedatensätze zu speichern; und
die Recheneinheit (112) dazu eingerichtet ist,
die Eingabedatensätze von der Speichereinheit (111) zu erhalten,
die Eingabedatenschemata aus den Eingabedatensätzen zu extrahieren,
die Eingabedatenschemata an den Server (120) zu übertragen,
die Prozesspipeline vom Server (120) zu empfangen,
aus den Eingabedatensätzen anhand der Prozesspipeline die Ausgabedatensätze zu erzeugen, und
die Ausgabedatensätze an den Server (120) zu übertragen; und
wobei die Speichereinheit (111) und die Recheneinheit (112) in einer Datenverarbeitungsvorrichtung oder in mehreren, verschiedenen, jedoch durch einen privilegierten Übertragungsweg miteinander verbundenen, Datenverarbeitungsvorrichtungen ausgestaltet sind.

3. Vorrichtung als Server (120) für ein föderales Rechensystem (100), die dazu eingerichtet ist,
Eingabedatenschemata von einem oder mehreren Clients (110) zu empfangen, wobei jedes Eingabedatenschema sowohl aus verfügbaren Datenquellentypinformationen als auch aus Stichprobendaten aus einem Eingabedatensatz extrahiert wird;
die empfangenen Eingabedatenschemata zu registrieren;
eine Prozesspipeline, die auf einem Prozessdatenschema basiert, von einem Benutzer (130) zu erhalten, wobei das Prozessdatenschema den Anforderungen des Benutzers (130) für eine beabsichtigte Aufgabe föderalen Rechnens entspricht;
die Ausführbarkeit der Prozesspipeline für die registrierten Eingabedatenschemata zu prüfen;
die Prozesspipeline an einen oder mehrere der Clients (110) zu übermitteln, deren registrierte Eingabedatenschemata mit dem Prozessdatenschema übereinstimmen;
Ausgabendatensätze von einem oder mehreren Clients (110) zu empfangen;
die empfangenen Ausgabedatensätze zu aggregieren; und
die aggregierten Ausgabedatensätze an den Benutzer (130) bereitzustellen.

4. Vorrichtung nach Anspruch 3, weiterhin dazu eingerichtet, um im Ansprechen auf eine Anfrage des Benutzers (130), die registrierten Eingabedatenschemata als Prozessdatenschemata auszugeben.

5. Vorrichtung nach einem Ansprüche 1 bis 4,
wobei die Prozesspipeline derart ausgestaltet ist, dass durch das Erzeugen eines Ausgabedatensatzes aus einem Eingabedatensatz
ein Maschinenlernen derart durchgeführt wird, dass der Eingabedatensatz als Trainingsdaten verwendet wird und der Ausgabedatensatz ein trainiertes Modell oder einen Teil davon darstellt, oder
ein Analysieren derart durchgeführt wird, dass der Eingabedatensatz analysiert wird und der Ausgabedatensatz Analyseergebnisse oder einen Teil davon darstellt.

6. Vorrichtung nach einem der Ansprüche 1 bis 5, wobei die Prozesspipeline in einem Format verpackt ist, wobei
das Format ein binäres Format ist, das die Prozesspipeline in einem gerichteten, azyklischen Graphen beschreibt, oder
das Format ein Bytecode ist, der zur Ausführung in einer virtuellen Maschine geeignet ist.

7. Vorrichtung nach einem der Ansprüche 1 bis 6, wobei die Eingabedatenschemata, die Prozesspipeline und/oder mindestens einer der Ausgabendatensätze verschlüsselt, oder verschlüsselt und signiert, ist, und von den Clients (110) bzw. dem Server (120) entschlüsselbar, oder entschlüsselbar und verifizierbar, ist.

8. System (100) zum föderalen Rechnen umfassend eine oder mehrere Vorrichtungen als Client (110) nach einem
der Ansprüche 1, 2 oder 5 bis 7, sofern abhängig von einem der Ansprüche 1 oder 2, und einer Vorrichtung als Server (120) nach einem der Ansprüche 3, 4 oder 5 bis 7, sofern abhängig von einem der Ansprüche 3 oder 4.

9. Computerimplementiertes Client-Verfahren (200) zum föderalen Rechnen, für einen Client (110) mit einem oder mehreren Eingabedatensätzen, wobei das Verfahren (200) umfasst:
Extrahieren (210) eines Eingabedatenschemas aus jedem Eingabedatensatz, wobei jedes Eingabedatenschema sowohl aus verfügbaren Datenquellentypinformationen als auch aus Stichprobendaten aus dem Eingabedatensatz extrahiert wird;
Übertragen (220) der extrahierten Eingabedatenschemata an einen Server (120), in welchem die empfangenen Eingabedatenschemata registriert werden;
Empfangen (230) einer Prozesspipeline, die auf einem Prozessdatenschema basiert, von dem Server (120), wobei das Prozessdatenschema den Anforderungen eines Benutzers (130) für eine beabsichtigte Aufgabe föderalen Rechnens entspricht, wobei die Ausführbarkeit der Prozesspipeline für die registrierten Eingabedatenschemata seitens des Servers (120) überprüft wird;
Erzeugen (240) anhand der Prozesspipeline jeweils eines Ausgabedatensatzes aus einem oder mehreren der Eingabedatensätzen, deren Eingabedatenschema mit dem Prozessdatenschema übereinstimmt; und
Übertragen (250) der erzeugten Ausgabedatensätze an den Server (120).

10. Verfahren nach Anspruch 9, wobei der Schritt des Erzeugens (240) der Ausgabedatensätze aus den Eingabedatensätzen anhand der Prozesspipeline umfasst:
ein Maschinenlernen, umfassend Verwenden der Eingabedatensätze als Trainingsdaten, so dass die Ausgabedatensätze ein trainiertes Modell oder einen Teil davon darstellen, oder
ein Analysieren der Eingabedatensätze, derart dass die Ausgabedatensätze Analyseergebnisse oder einen Teil davon darstellen.

11. Verfahren nach einem der Ansprüche 9 bis 10, weiterhin umfassend Verschlüsseln der der Eingabedatenschemata und/oder Entschlüsseln (235), oder Entschlüsseln und Verifizieren (235), der Prozesspipeline und/oder mindestens eines der Ausgabedatensätze.

12. Computerimplementiertes Server-Verfahren (300) zum föderalen Rechnen, für einen Server (120), wobei das Verfahren (300) umfasst:
Empfangen (310) von Eingabedatenschemata von einem oder mehreren Clients, wobei jedes Eingabedatenschema sowohl aus verfügbaren Datenquellentypinformationen als auch aus Stichprobendaten aus dem Eingabedatensatz extrahiert wird;
Registrieren (320) der empfangenen Eingabedatenschemata;
Erhalten (330) einer Prozesspipeline, die auf einem Prozessdatenschema basiert, von einem Benutzer (130), wobei das Prozessdatenschema den Anforderungen des Benutzers (130) für eine beabsichtigte Aufgabe föderalen Rechnens entspricht;
Überprüfen der Ausführbarkeit der Prozesspipeline für die registrierten Eingabedatenschemata;
Übermitteln (340) der Prozesspipeline an einen oder mehrere Clients, deren registrierte Eingabedatenschemata mit dem Prozessdatenschema übereinstimmen;
Empfangen (350) von Ausgabedatensätzen von einem oder mehreren Clients;
Aggregieren (360) der empfangenen Ausgabedatensätze; und
Bereitstellen (370) der aggregierten Ausgabedatensätze an den Benutzer (130).

13. Verfahren (300) nach Anspruch 12, wobei das Verfahren (300) vor dem Erhalten (330) der Prozesspipeline ein Erhalten (321) einer Anfrage des Benutzers (130) und, im Ansprechen darauf, ein Ausgeben (322) der im Server (120) registrierten Eingabedatenschemata als Prozessdatenschemata umfasst.

14. Verfahren (300) nach einem der Ansprüche 12 oder 13, weiterhin umfassend Prüfen (331) der Ausführbarkeit der Prozesspipeline für die registrierten Eingabedatenschemata.

15. Verfahren (300) nach einem der Ansprüche 12 bis 14, weiterhin umfassend Verpacken (332), vor dem Übermitteln (340), der Prozesspipeline in ein Format, wobei
das Format ein binäres Format ist, das die Prozesspipeline in einem gerichteten, azyklischen Graphen beschreibt, oder
das Format ein Bytecode ist, der zur Ausführung in einer virtuellen Maschine geeignet ist.

16. Verfahren (300) einem der Ansprüche 12 bis 15, weiterhin umfassend Entschlüsseln der Eingabedatenschemata und/oder Verschlüsseln (335), oder Verschlüsseln und Signieren (335), der Prozesspipeline und/oder mindestens eines der Ausgabendatensätze.

17. Computerimplementiertes Verfahren zum föderalen Rechnen umfassend die Schritte eines Client-Verfahrens nach einem der Ansprüche 9 bis 11 und eines Server-Verfahrens nach einem der Schritte 12 bis 16.

18. Computerprogramm-Produkt umfassend Befehle, die bei der Ausführung durch ein Datenverarbeitungssystem, welches einen Server und zumindest einen Clients umfasst, dieses veranlassen, ein computerimplementiertes Verfahren nach einem der Ansprüche 9 bis 17 auszuführen.

19. Computerprogramm-Produkt nach Anspruch 18, wobei das Computerprogramm-Produkt ein computerlesbares Medium umfasst, auf dem die Softwarecode-Abschnitte gespeichert sind, wobei das Programm direkt in einen internen Speicher des Datenverarbeitungssystems ladbar ist.

## Claims

1. A device acting as a client (110) for a federated computing system (100), the device being configured to
store one or multiple input data sets;
extract an input data schema from each input data set, wherein each input data schema is extracted from both available data source type information and sample data from the input data set;
transmit the extracted input data schemas to a server (120), on which the input data schemas are registered;
receive from the server (120) a process pipeline based on a process data schema, that meets the requirements of a user (130) for an intended federal computing task, wherein the server (120) verifies the executability of the process pipeline for the registered input data schemas;
generate, using the process pipeline, one output data set in each case from one or multiple ones of the input data sets the input data schema of which coincides with the process data schema; and
transmit the generated output data sets to the server (120).

2. The device according to claim 1, further comprising a storage unit (111) and a processing unit (112), wherein
the storage unit (111) is configured to store the input data sets; and
the processing unit (112) is configured to
receive the input data sets from the storage unit (111),
extract the input data schemas from the input data sets,
transmit the input data schemas to the server (120),
receive the process pipeline from the server (120),
generate the output data sets from the input data sets using the process pipeline, and
transmit the output data sets to the server (120); and
wherein the storage unit (111) and the processing unit (112) are implemented in one data processing device or in multiple, separate data processing devices interconnected via a dedicated communication path.

3. A device acting as a server (120) for a federated computing system (100), the device being configured to
receive input data schemas from one or multiple clients (110), wherein each input data schema is extracted from both available data source type information and sample data from an input data set;
register the received input data schemas;
receive a process pipeline based on a process data schema from a user (130), wherein the process data schema corresponds to the user's (130) requirements for an intended federated computing task;
verify the executability of the process pipeline for the registered input data schemas;
transmit the process pipeline to one or multiple ones of the clients (110) the registered input data schemas of which coincide with the process data schema;
receive output data sets from one or multiple clients (110);
aggregate the received output data sets; and
provide the aggregated output data sets to the user (130).

4. The device according to claim 3, further configured to output the registered input data schemas as process data schemas in response to a request from the user (130).

5. The device according to one of claims 1 through 4,
wherein the process pipeline is configured such that, by generating an output data set from an input data set,
machine learning is performed such that the input data set is used as training data and the output data set represents a trained model or a part thereof, or
an analysis is performed such that the input data set is analyzed and the output data set represents the analysis results or a part thereof.

6. A device according to one of claims 1 through 5, wherein the process pipeline is packaged in a format, wherein
the format is a binary format that describes the process pipeline in a directed, acyclic graph, or
the format is a bytecode suitable for execution in a virtual machine.

7. A device according to one of claims 1 through 6, wherein the input data schemas, the process pipeline, and/or at least one of the output data sets are encrypted, or encrypted and signed, and are decryptable, or decryptable and verifiable, by the clients (110) and/or the server (120).

8. A system (100) for federated computing comprising one or multiple devices as clients (110) according to one of claims 1, 2, or 5 through 7 if dependent on one of claims 1 or 2, and a device as a server (120) according to one of claims 3, 4, or 5 through 7 if dependent on one of claims 3 or 4.

9. A computer-implemented client method (200) for federated computing, for a client (110) having one or multiple input data sets, wherein the method (200) comprises:
extracting (210) an input data schema from each input data set, wherein each input data schema is extracted from both available data source type information and sample data from the input data set;
transmitting (220) the extracted input data schemas to a server (120), in which the received input data schemas are registered;
receiving (230) a process pipeline based on a process data schema from the server (120), wherein the process data schema corresponds to the requirements of a user (130) for an intended federal computing task, wherein the executability of the process pipeline for the registered input data schemas is verified by the server (120);
generating (240), using the process pipeline, one output data set in each case from one or multiple ones of the input data sets the input data schema of which coincides with the process data schema; and
transmitting (250) the generated output data sets to the server (120).

10. The method according to claim 9, wherein the step of generating (240) the output data sets from the input data sets using the process pipeline comprises:
machine learning, comprising using the input data sets as training data, such that the output data sets represent a trained model or a part thereof, or
analyzing the input data sets such that the output data sets represent analysis results or a part thereof.

11. The method according to one of claims 9 through 10, further comprising encrypting the input data schemas and/or decrypting (235), or decrypting and verifying (235), the process pipeline and/or at least one of the output data sets.

12. A computer-implemented server method (300) for federated computing, for a server (120), wherein the method (300) comprises:
receiving (310) input data schemas from one or multiple clients, wherein each input data schema is extracted from both available data source type information and sample data from the input data set;
registering (320) the received input data schemas;
receiving (330) a process pipeline based on a process data schema from a user (130), wherein the process data schema corresponds to the user's (130) requirements for an intended federal computing task;
verifying the executability of the process pipeline for the registered input data schemas;
transmitting (340) the process pipeline to one or multiple clients the registered input data schemas of which coincide with the process data schema;
receiving (350) output data sets from one or multiple clients;
aggregating (360) the received output data sets; and
providing (370) the aggregated output data sets to the user (130).

13. The method (300) according to claim 12, wherein the method (300), prior to receiving (330) the process pipeline, comprises receiving (321) a request from the user (130) and, in response thereto, outputting (322) the input data schemas registered in the server (120) as process data schemas.

14. The method (300) according to one of claims 12 or 13, further comprising verifying (331) the executability of the process pipeline for the registered input data schemas.

15. The method (300) according to one of claims 12 through 14, further comprising packaging (332), prior to transmitting (340), the process pipeline into a format, wherein
the format is a binary format that describes the process pipeline in a directed acyclic graph, or
the format is a bytecode suitable for execution in a virtual machine.

16. The method (300) according to one of claims 12 through 15, further comprising decrypting the input data schemas and/or encrypting (335), or encrypting and signing (335), the process pipeline and/or at least one of the output data sets.

17. A computer-implemented method for federated computing comprising the steps of a client method according to one of claims 9 through 11 and a server method according to one of steps 12 through 16.

18. A computer program product comprising instructions that, when executed by a data processing system comprising a server and at least one client, cause the system to perform a computer-implemented method according to one of claims 9 through 17.

19. The computer program product according to claim 18, wherein the computer program product comprises a computer-readable medium on which the software code sections are stored, and wherein the program is directly loadable into an internal memory of the data processing system.

## Revendications

1. Dispositif en tant que client (110) pour un système de calcul fédéré (100), qui est configuré pour :
stocker un ou plusieurs ensembles de données d'entrée ;
extraire, à partir de chaque ensemble de données d'entrée, un schéma de données d'entrée, chaque schéma de données d'entrée étant extrait à la fois à partir d'informations disponibles sur le type de source de données et à partir de données d'échantillon de l'ensemble de données d'entrée ;
transmettre les schémas de données d'entrée extraits à un serveur (120), sur lequel les schémas de données d'entrée sont enregistrés ;
recevoir du serveur (120) un pipeline de traitement basé sur un schéma de données de traitement qui répond aux exigences d'un utilisateur (130) pour une tâche prévue de calcul fédéré, l'exécutabilité du pipeline de traitement pour les schémas de données d'entrée enregistrés étant vérifiée par le serveur (120) ;
générer, sur la base du pipeline de traitement, à partir d'un ou plusieurs des ensembles de données d'entrée dont le schéma de données d'entrée correspond au schéma de données de traitement, respectivement, un ensemble de données de sortie ; et
transmettre les ensembles de données de sortie générés au serveur (120).

2. Dispositif selon la revendication 1, comprenant en outre une unité de mémoire (111) et une unité de calcul (112), dans lequel
l'unité de mémoire (111) est configurée pour stocker les ensembles de données d'entrée ; et
l'unité de calcul (112) est configurée pour :
recevoir les ensembles de données d'entrée de l'unité de mémoire (111),
extraire les schémas de données d'entrée à partir des ensembles de données d'entrée,
transmettre les schémas de données d'entrée au serveur (120),
recevoir le pipeline de traitement du serveur (120), générer, à partir des ensembles de données d'entrée, sur la base du pipeline de traitement, les ensembles de données de sortie, et
transmettre les ensembles de données de sortie au serveur (120) ; et dans lequel
l'unité de mémoire (111) et l'unité de calcul (112) sont agencées dans un dispositif de traitement de données ou dans plusieurs dispositifs de traitement de données distincts mais reliés entre eux par une voie de transmission privilégiée.

3. Dispositif en tant que serveur (120) pour un système de calcul fédéré (100), qui est configuré pour :
recevoir des schémas de données d'entrée d'un ou de plusieurs clients (110), chaque schéma de données d'entrée étant extrait à la fois à partir d'informations disponibles sur le type de source de données et à partir de données d'échantillon d'un ensemble de données d'entrée ;
enregistrer les schémas de données d'entrée reçus ;
recevoir d'un utilisateur (130) un pipeline de traitement basé sur un schéma de données de traitement, le schéma de données de traitement répondant aux exigences de l'utilisateur (130) pour une tâche prévue de calcul fédéré ;
vérifier l'exécutabilité du pipeline de traitement pour les schémas de données d'entrée enregistrés ;
transmettre le pipeline de traitement à un ou plusieurs des clients (110) dont les schémas de données d'entrée enregistrés correspondent au schéma de données de traitement ;
recevoir des ensembles de données de sortie d'un ou de plusieurs clients (110) ; agréger les ensembles de données de sortie reçus ; et
fournir les ensembles de données de sortie agrégés à l'utilisateur (130).

4. Dispositif selon la revendication 3, en outre configuré pour fournir les schémas de données d'entrée enregistrés en tant que schémas de données de traitement en réponse à une demande de l'utilisateur (130).

5. Dispositif selon l'une des revendications 1 à 4,
dans lequel le pipeline de traitement est conçu de telle sorte que, par la génération d'un ensemble de données de sortie à partir d'un ensemble de données d'entrée,
un apprentissage automatique se produit, de telle sorte que l'ensemble de données d'entrée est utilisé comme données d'entraînement et l'ensemble de données de sortie représente un modèle entraîné ou une partie de celui-ci, ou
une analyse est effectuée de telle sorte que l'ensemble de données d'entrée est analysé et l'ensemble de données de sortie représente des résultats d'analyse ou une partie de ceux-ci.

6. Dispositif selon l'une des revendications 1 à 5, dans lequel
le pipeline de traitement est encapsulé dans un format, le format étant un format binaire qui décrit le pipeline de traitement dans un graphe orienté acyclique, ou
un bytecode qui est adapté à l'exécution dans une machine virtuelle.

7. Dispositif selon l'une des revendications 1 à 6, dans lequel les schémas de données d'entrée, le pipeline de traitement et/ou au moins un des ensembles de données de sortie sont chiffrés, ou chiffrés et signés, et peuvent être déchiffrés, ou déchiffrés et vérifiés, par les clients (110) ou le serveur (120).

8. Système de calcul fédéré (100) comprenant un ou plusieurs dispositifs en tant que client (110) selon l'une des revendications 1, 2 ou 5 à 7, dans la mesure où elles dépendent de l'une des revendications 1 ou 2, et un dispositif en tant que serveur (120) selon l'une des revendications 3, 4 ou 5 à 7, dans la mesure où elles dépendent de l'une des revendications 3 ou 4.

9. Procédé client informatique (200) de calcul fédéré, pour un client (110) avec un ou plusieurs ensembles de données d'entrée, le procédé (200) comprenant les étapes suivantes :
extraction (210) d'un schéma de données d'entrée à partir de chaque ensemble de données d'entrée, chaque schéma de données d'entrée étant extrait à la fois à partir d'informations disponibles sur le type de source de données et à partir de données d'échantillon de l'ensemble de données d'entrée ;
transmission (220) des schémas de données d'entrée extraits à un serveur (120), dans lequel les schémas de données d'entrée reçus sont enregistrés ;
réception (230) d'un pipeline de traitement basé sur un schéma de données de traitement, en provenance du serveur (120), le schéma de données de traitement répondant aux exigences d'un utilisateur (130) pour une tâche prévue de calcul fédéré, l'exécutabilité du pipeline de traitement pour les schémas de données d'entrée enregistrés étant vérifiée par le serveur (120) ;
génération (240), sur la base du pipeline de traitement, respectivement d'un ensemble de données de sortie à partir d'un ou plusieurs des ensembles de données d'entrée dont le schéma de données d'entrée correspond au schéma de données de traitement ; et
transmission (250) des ensembles de données de sortie générés au serveur (120).

10. Procédé selon la revendication 9, dans lequel l'étape de génération (240) des ensembles de données de sortie à partir des ensembles de données d'entrée sur la base du pipeline de traitement comprend :
un apprentissage automatique, comprenant l'utilisation des ensembles de données d'entrée comme données d'entraînement, de sorte que les ensembles de données de sortie représentent un modèle entraîné ou une partie de celui-ci, ou
une analyse des ensembles de données d'entrée, de sorte que les ensembles de données de sortie représentent des résultats d'analyse ou une partie de ceux-ci.

11. Procédé selon l'une des revendications 9 à 10, comprenant en outre le chiffrement des schémas de données d'entrée et/ou le déchiffrement (235), ou le déchiffrement (235) et la vérification, du pipeline de traitement et/ou d'au moins un des ensembles de données de sortie.

12. Procédé serveur informatique (300) de calcul fédéré, pour un serveur (120), le procédé (300) comprenant les étapes suivantes :
réception (310) de schémas de données d'entrée d'un ou de plusieurs clients, chaque schéma de données d'entrée étant extrait à la fois à partir d'informations disponibles sur le type de source de données et à partir de données d'échantillon de l'ensemble de données d'entrée ;
enregistrement (320) des schémas de données d'entrée reçus ;
réception (330) d'un pipeline de traitement basé sur un schéma de données de traitement, en provenance d'un utilisateur (130), le schéma de données de traitement répondant aux exigences de l'utilisateur (130) pour une tâche prévue de calcul fédéré ;
vérification de l'exécutabilité du pipeline de traitement pour les schémas de données d'entrée enregistrés ;
transmission (340) du pipeline de traitement à un ou plusieurs clients dont les schémas de données d'entrée enregistrés correspondent au schéma de données de traitement ;
réception (350) d'ensembles de données de sortie d'un ou de plusieurs clients ;
agrégation (360) des ensembles de données de sortie reçus ; et
mise à disposition (370) des ensembles de données de sortie agrégés à l'utilisateur (130).

13. Procédé (300) selon la revendication 12, dans lequel le procédé (300), avant la réception (330) du pipeline de traitement, comprend la réception (321) d'une demande de l'utilisateur (130) et, en réponse à celle-ci, la fourniture (322) des schémas de données d'entrée enregistrés dans le serveur (120) en tant que schémas de données de traitement.

14. Procédé (300) selon l'une des revendications 12 ou 13, comprenant en outre la vérification (331) de l'exécutabilité du pipeline de traitement pour les schémas de données d'entrée enregistrés.

15. Procédé (300) selon l'une des revendications 12 à 14, comprenant en outre l'encapsulation (332), avant la transmission (340), du pipeline de traitement dans un format, le format étant un format binaire qui décrit le pipeline de traitement dans un graphe orienté acyclique, ou
un bytecode qui est adapté à l'exécution dans une machine virtuelle.

16. Procédé (300) selon l'une des revendications 12 à 15, comprenant en outre le déchiffrement des schémas de données d'entrée et/ou le chiffrement (335), ou le chiffrement et la signature (335), du pipeline de traitement et/ou d'au moins un des ensembles de données de sortie.

17. Procédé informatique de calcul fédéré comprenant les étapes d'un procédé client selon l'une des revendications 9 à 11 et d'un procédé serveur selon l'une des revendications 12 à 16.

18. Produit programme d'ordinateur comprenant des instructions qui, lors de leur exécution par un système de traitement de données comprenant un serveur et au moins un client, amènent celui-ci à exécuter un procédé informatique selon l'une des revendications 9 à 17.

19. Produit programme d'ordinateur selon la revendication 18, dans lequel le produit programme d'ordinateur comprend un support lisible par ordinateur sur lequel sont stockées les sections de code logiciel, le programme étant directement chargeable dans une mémoire interne du système de traitement de données.
